# EUROPEAN PATENT APPLICATION

(11) **EP 2 511 759 A1**
(43) Date of publication of application: **17.10.2012**
(21) Application number: 12163150.1
(22) Date of filing: 04.04.2012
(51) Int. Cl.: G02F 1/13357, G02B 6/00

(54) **Liquid crystal display**

(30) Priority: 11.04.2011 JP 2011087044
(71) Applicant: Funai Electric Co., Ltd., Daito-shi, Osaka 574-0013 (JP)
(72) Inventor: Nitanai, Naoki, Osaka, 574-0013 (JP)
(74) Representative: Manitz, Finsterwald & Partner GbR

(57) **Abstract**

This liquid crystal display includes a liquid crystal panel (13), a substrate (22) including a mounting surface (22a) mounted with a light-emitting device (21) and a light guide (23) including an upper inner side surface (23c) of a through-hole (23b) arranged to be opposed to the mounting surface for receiving light emitted by the light-emitting diode, a light guide body portion (23a) guiding the light received through the upper inner side surface toward the liquid crystal panel and a lower inner side surface (23d) of the through-hole mounted with the substrate so that the mounting surface is opposed to the upper inner surface.

## Description

### BACKGROUND OF THE INVENTION

### Field of the Invention

The present invention relates to a liquid crystal display, and more particularly, it relates to a liquid crystal display including a light guide.

### Description of the Background Art

A liquid crystal display including a light guide is known in general, as disclosed in Japanese Patent Laying-Open No. 2002-156632, for example.

The aforementioned Japanese Patent Laying-Open No. 2002-156632 discloses a liquid crystal display including a liquid crystal panel, a substrate mounted with an LED (light-emitting device), a light guide, including a photoreceiving surface receiving light emitted by the LED, for guiding the light received through the photoreceiving surface toward the liquid crystal panel and a mold frame provided separately from the light guide to surround the light guide. In this liquid crystal display, the mold frame is not fixed to the light guide, but formed to urge the light guide arranged therein in a direction with pawls. The substrate mounted with the LED is mounted on an inner surface of the mold frame along the direction.

In the liquid crystal display disclosed in the aforementioned Japanese Patent Laying-Open No. 2002-156632, however, not only the light guide but also the mold frame of resin provided separately from the light guide is deformed when the ambient temperature or humidity changes or stress is externally applied to the liquid crystal display, and hence the positional relation between the LED provided on the side of the mold frame and the light guide remarkably changes. Consequently, the light emitted by the LED may conceivably be improperly introduced into the photoreceiving surface of the light guide. In this case, brightness of the light guided toward the liquid crystal panel is disadvantageously reduced and irregularized.

### SUMMARY OF THE INVENTION

The present invention has been proposed in order to solve the aforementioned problem, and an object of the present invention is to provide a liquid crystal display capable of suppressing reduction and irregularization of brightness of light guided to a liquid crystal panel.

A liquid crystal display according to an aspect of the present invention includes a liquid crystal panel, a substrate including a mounting surface mounted with a light-emitting device and a light guide including a photoreceiving surface arranged to be opposed to the mounting surface for receiving light emitted by the light-emitting device, a light guide body portion guiding the light received through the photoreceiving surface toward the liquid crystal panel and a mounting portion mounted with the substrate so that the mounting surface is opposed to the photoreceiving surface.

In the liquid crystal display according to the aspect of the present invention, as hereinabove described, the substrate having the mounting surface mounted with the light-emitting device is mounted on the mounting portion provided on the light guide so that the substrate mounted on the mounting portion of the light guide is deformed following deformation of the light guide when the ambient temperature or humidity changes or stress is externally applied to the liquid crystal display to deform the light guide, whereby the relative positions of (positional relation between) the light-emitting device mounted on the mounting surface of the substrate and the photoreceiving surface of the light guide can be inhibited from changing. Thus, the light emitted by the light-emitting device can be inhibited from being improperly introduced into the photoreceiving surface of the light guide, whereby brightness of the light guided toward the liquid crystal panel can be inhibited from reduction and irregularization. Further, the substrate is so arranged that the mounting surface thereof and the photoreceiving surface of the light guide are opposed to each other, whereby the light-emitting device mounted on the mounting surface of the substrate and the photoreceiving surface of the light guide can be easily opposed to each other.

In the aforementioned liquid crystal display according to the aspect, the mounting surface of the substrate or a surface of the substrate on the back side of the mounting surface is preferably bonded to the mounting portion so that the mounting surface is opposed to the photoreceiving surface. According to this structure, the mounting surface of the substrate and the photoreceiving surface of the light guide can be easily opposed to each other. Further, the mounting surface or the surface on the back side of the mounting surface is so bonded to the mounting portion of the light guide that the light guide and the substrate can be approximated to each other, whereby the quantity of relative displacement of the light guide and the substrate can be reduced. Thus, the relative positions of the light-emitting device and the photoreceiving surface can be more effectively inhibited from changing.

In the aforementioned liquid crystal display according to the aspect, the light-emitting device is preferably arranged to be surrounded by the light guide. According to this structure, the substrate mounted with the light-emitting device can be easily approximated to the light guide, whereby the relative positions of the light-emitting device and the photoreceiving surface can be easily inhibited from changing. Further, the light guide surrounds the light-emitting device, whereby the light emitted by the light-emitting device can be efficiently introduced into the light guide.

In the aforementioned liquid crystal display according to the aspect, the light guide preferably further includes a through-hole or a recess portion provided in the vicinity of an end surface of the light guide to extend in a direction along the end surface of the light guide, and the substrate is preferably bonded to the mounting portion provided on the through-hole or the recess portion. According to this structure, the substrate can be arranged inside the light guide, whereby the substrate can more easily follow deformation of the light guide.

In this case, the through-hole or the recess portion of the light guide is preferably provided with a first inner side surface serving as the photoreceiving surface and a second inner side surface serving as the mounting portion arranged to be opposed to the first inner side surface, and the substrate is preferably bonded to the second inner side surface serving as the mounting portion provided on the through-hole or the recess portion of the light guide. According to this structure, the mounting surface (light-emitting device) of the substrate and the photoreceiving surface of the light guide can be easily opposed to each other through the inner side surfaces of the through-hole or the recess portion provided on the light guide.

In the aforementioned liquid crystal display having the light guide including the through-hole or the recess portion, the through-hole or the recess portion is preferably formed to pass through the light guide or to be recessed in the thickness direction of the light guide. According to this structure, the substrate can be arranged inside the through-hole or the recess portion of the light guide, whereby the substrate can be easily arranged inside the light guide.

In the aforementioned liquid crystal display having the light guide including the through-hole or the recess portion provided with the first inner side surface and the second inner side surface, the substrate is preferably bonded to the second inner side surface serving as the mounting portion so that the light-emitting device and the first inner side surface serving as the photoreceiving surface are arranged to be separated from each other at a prescribed interval. According to this structure, the light-emitting device and the first inner side surface are so separated from each other that the light-emitting device can be inhibited from coming into contact with the first inner side surface upon deformation of the light guide.

In the aforementioned liquid crystal display according to the aspect, the mounting portion is preferably provided to protrude from the light guide body portion toward the substrate, and the substrate is preferably bonded to the mounting portion protruding toward the substrate. According to this structure, the substrate can be easily bonded to the light guide through the mounting portion protruding toward the substrate while avoiding the light-emitting device mounted on the mounting surface.

In this case, a plurality of light-emitting devices are preferably provided on the mounting surface of the substrate at a prescribed interval, and the mounting surface of the substrate is preferably bonded to the mounting portion on a plurality of positions between the light-emitting devices. According to this structure, the substrate can be bonded to the mounting portion on the plurality of positions of the mounting surface, whereby the substrate can be more firmly mounted on the light guide. Thus, the relative positions of the light-emitting device and the photoreceiving surface can be more reliably inhibited from changing.

In the aforementioned liquid crystal display having the plurality of light-emitting devices provided on the mounting surface of the substrate at the prescribed interval, a projecting portion serving as the mounting portion and a recessed relief portion for receiving the light-emitting devices thereon are preferably integrally formed on a portion of the light guide opposed to the substrate. According to this structure, the mounting portion for the substrate and the relief portion for the light-emitting devices can be easily formed.

In the aforementioned liquid crystal display having the plurality of light-emitting devices provided on the mounting surface of the substrate at the prescribed interval, the mounting portion of the light guide protruding toward the substrate is preferably formed to have a width smaller than the prescribed interval between adjacent light-emitting devices. According to this structure, the mounting surface of the substrate and the mounting portion can be easily bonded to each other between the light-emitting devices.

In the aforementioned liquid crystal display according to the aspect, the substrate is preferably formed to be deflectable in response to deformation of the mounting portion of the light guide. According to this structure, the substrate can easily follow deformation of the light guide through deflection upon the deformation of the light guide, whereby the relative positions of the light-emitting device and the photoreceiving surface can be more easily inhibited from changing.

In the aforementioned liquid crystal display according to the aspect, the substrate is preferably bonded to the mounting portion through a heat radiation tape having adhesiveness. According to this structure, heat generated by the light-emitting device can be radiated through the heat radiation tape.

The aforementioned liquid crystal display according to the aspect preferably further includes a rear chassis arranged to cover the back surface of the light guide, and the rear chassis is preferably formed not to be in contact with the substrate. According to this structure, the relative positions of the light-emitting device and the photoreceiving surface can be inhibited from changing due to contact between the rear chassis and the substrate.

In the aforementioned liquid crystal display according to the aspect, the light-emitting device preferably includes a light-emitting diode. According to this structure, brightness of light guided from the light-emitting diode toward the liquid crystal panel can be inhibited from reduction and irregularization.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a liquid crystal display according to each of first and second embodiments of the present invention;
Fig. 2 is an exploded perspective view showing the internal structure of a display body of the liquid crystal display according to each of the first and second embodiments of the present invention;
Fig. 3 is a sectional view of the display body of the liquid crystal display according to the first embodiment of the present Invention taken along the line 300-300 in Fig. 2;
Fig. 4 is a perspective view showing the structure of a substrate of the liquid crystal display according to each of the first and second embodiments of the present invention;
Fig. 5 is a front elevational view showing the structure of a backlight of the liquid crystal display according to the first embodiment of the present invention;
Fig. 6 is a sectional view of the display body of the liquid crystal display according to the second embodiment of the present invention taken along the line 300-300 in Fig. 2;
Fig. 7 is a front elevational view showing the structure of a backlight of the liquid crystal display according to the second embodiment of the present invention; and
Fig. 8 is a sectional view showing a modification of the liquid crystal display according to the first embodiment of the present invention.

### DESCRIPTION OF THE PREFERRED EMBODIMENTS

Embodiments of the present invention are now described with reference to the drawings.

### (First Embodiment)

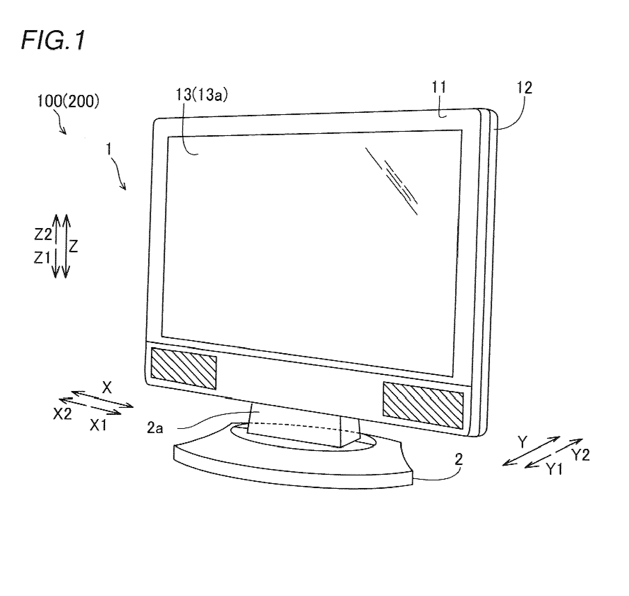

First, the structure of a liquid crystal display 100 according to a first embodiment of the present invention is described with reference to Figs. 1 to 5. The liquid crystal display 100 described below may be a liquid crystal television set having a TV tuner function, or may be a liquid crystal monitor or the like connected to a PC (Personal Computer) or the like.

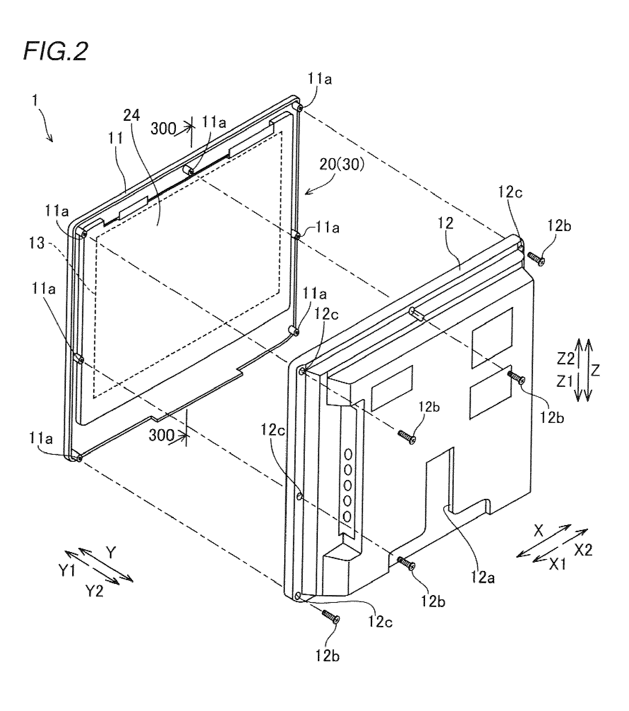

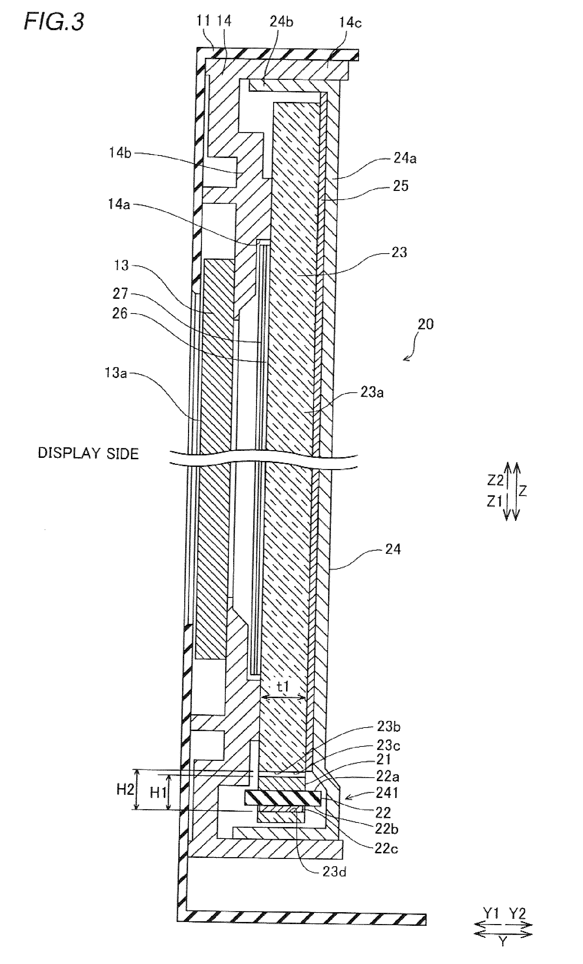

The liquid crystal display 100 according to the first embodiment of the present invention includes a display body 1 and a stand 2 supporting the display body 1 to be rotatable in the horizontal direction (direction X) and the anteroposterior direction (direction Y), as shown in Fig. 1. The display body 1 includes a front cabinet 11, a rear cabinet 12, a liquid crystal panel 13, a mold frame 14 and a backlight 20, as shown in Figs. 2 and 3.

The front cabinet 11 is arranged on the front side (along arrow Y1) of the display body 1, as shown in Fig. 2. The front cabinet 11 consists of a resin member, and is formed to support the liquid crystal panel 13, the mold frame 14 and the backlight 20, as shown in Fig. 3. Further, the front cabinet 13 is provided to cover a portion of the liquid crystal panel 13 in the vicinity of an edge portion of a display surface 13a described later. Threaded holes 11a for fixing the rear cabinet 12 with screws 12b are provided on a rear outer peripheral portion (along arrow Y2) of the front cabinet 11, as shown in Fig. 2.

The rear cabinet 12 is arranged on the rear side (along arrow Y2) of the display body 1, as shown in Fig. 2. The rear cabinet 12 consists of a resin member, and is substantially rectangular in plan view. Further, the rear cabinet 12 is formed to cover the rear side of the display body 1. In addition, the rear cabinet 12 is integrally provided with a mounting portion 12a for mounting a leg portion 2a (see Fig. 1) of the stand 2. Screw receiving holes 12c for receiving screws 12b are provided on an outer peripheral portion of the rear cabinet 12. The rear cabinet 12 is fixed to the front cabinet 11 with the screws 12b, from the back surface side (along arrow Y2) frontward (along arrow Y1).

The liquid crystal panel 13 is arranged between the front cabinet 11 and the mold frame 14 and supported by the front cabinet 11 and the mold frame 14, as shown in Fig. 3. The liquid crystal panel 13 is formed to be capable of displaying images on the display surface 13a provided on the front side (along arrow Y1) thereof. The liquid crystal panel 13 is substantially rectangular as viewed from the front side (as viewed along arrow Y1). The liquid crystal panel 13 is formed to receive light from the backlight 20 arranged on the rear side (along arrow Y2) thereof. The liquid crystal panel 13 is connected to a control board portion (not shown) of the display body 1. The liquid crystal panel 13 is combined with the backlight 20, to constitute a liquid crystal module.

The mold frame 14 consists of a resin member, and is arranged between the front cabinet 11 and the backlight 20, as shown in Fig. 3. The mold frame 14 is provided in the form of a frame. More specifically, the mold frame 14 includes a receiving portion 14b, having a substantially rectangular opening 14a in a central region thereof, receiving the liquid crystal panel 13 thereon and a wall portion 14c protruding rearward (along arrow Y2) along an outer peripheral portion of the receiving portion 14b. The liquid crystal panel 13 is mounted on the front side (along arrow Y1) of the receiving portion 14b of the mold frame 14, on a position overlapping with the opening 14a in the direction Y.

The backlight 20 is formed to emit light toward the rear surface (along arrow Y2) of the liquid crystal panel 13. Thus, the liquid crystal panel 13 can display bright and clear images. The backlight 20 is an edge-lit type member receiving light from a light source from an edge of a light guide. The backlight 20 includes a plurality of light-emitting diodes 21, a substrate 22, a light guide 23, a rear chassis 24, a reflection sheet 25, a diffusion sheet 26 and a plurality of lens sheets 27, as shown in Fig. 3. The light-emitting diodes 21 are examples of the "light-emitting device" in the present invention.

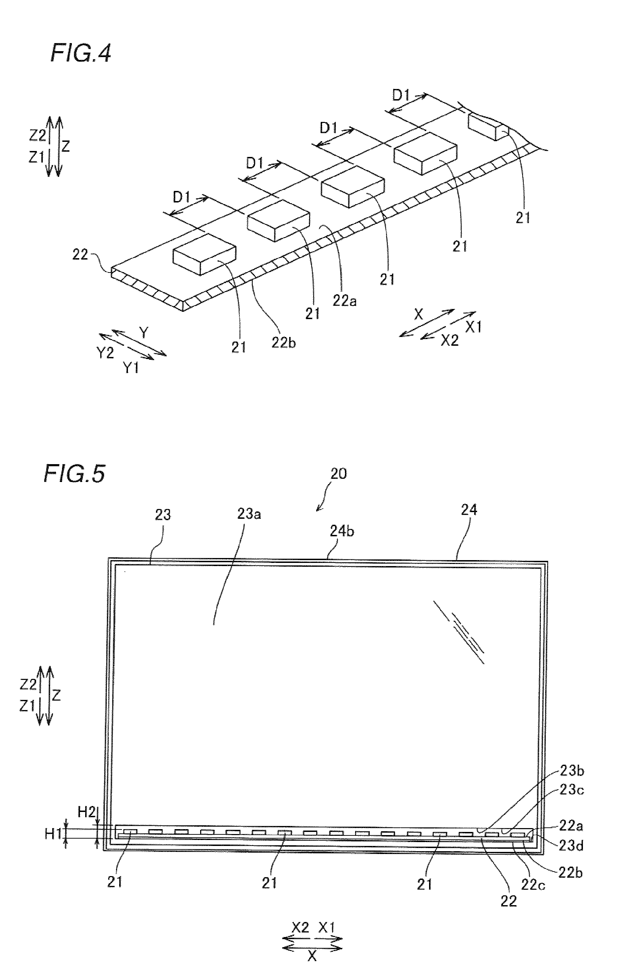

The plurality of light-emitting diodes 21 are mounted on a mounting surface 22a of the substrate 22 at a substantially regular interval D1 along the direction X, as shown in Fig. 4. The light-emitting diodes 21 are arranged under an upper inner side surface 23c of a through-hole 23b, described later, of the light guide 23 (along arrow Z1) to be opposed to the upper inner side surface 23c, as shown in Figs. 3 and 5. In other words, the light-emitting diodes 21 are formed to emit light upward (along arrow Z2) to be directed toward the upper inner side surface 23c of the light guide 23. Further, the light-emitting diodes 21 are arranged to be surrounded by the light guide 23 inside the through-hole 23b, described later, of the light guide 23.

The substrate 22 has the mounting surface 22a mounted with the light-emitting diodes 21 on the upper side (along arrow Z2) and a back surface 22b arranged on the back side (along arrow Z1) of the mounting surface 22a, as shown in Figs. 3 and 4. The back surface 22b of the substrate 22 is bonded to a lower inner side surface 23d of the through-hole 23b, described later, of the light guide 23 through a heat radiation tape 22c, as shown in Figs. 3 and 4. The substrate 22 is made of glass epoxy resin, and formed to be deflectable in response to deformation of the light guide 23. The mounting surface 22a of the substrate 22 is arranged to be opposed to the upper inner side surface 23c of the through-hole 23b, described later, of the light guide 23. The substrate 22 has wires (not shown), and connects the plurality of light-emitting diodes 21 with the control board portion (not shown) . The heat radiation tape 22c is made of an acrylic material, easily conducts heat, and has adhesiveness. The light-emitting diodes 21, the substrate 22 and the heat radiation tape 22c have a height H1 (length in a direction Z) in total. The back surface 22b is an example of the "surface on the back side of the mounting surface" in the present invention.

The light guide 23 is made of transparent acrylic resin having translucency, and provided in the form of a flat plate having a thickness t1 (in the direction Y), as shown in Fig. 3. The light guide 23 is substantially rectangular in plan view, as shown in Fig. 5. Further, the light guide 23 includes a light guide body portion 23a and the through-hole 23b. The light guide body portion 23a is formed to guide light received from the light-emitting diodes 21 to the liquid crystal panel 13.

According to the first embodiment, the through-hole 23b is formed to pass through the light guide 23 in the thickness direction (direction Y) thereof. The through-hole 23b is in the form of a rectangle extending in the direction X, and provided in the vicinity of a lower end surface (along arrow Z1) of the light guide 23. The through-hole 23b is provided with the upper inner surface 23c and the lower inner side surface 23d on the upper and lower sides (along arrows Z2 and Z1) thereof respectively. The upper inner side surface 23c of the through-hole 23b is arranged to be opposed to the light-emitting diodes 21, and formed to receive the light emitted by the light-emitting diodes 21. The substrate 22 mounted with the light-emitting diodes 21 is bonded to the lower inner side surface 23d of the through-hole 23b through the heat radiation tape 22c. The upper and lower inner side surfaces 23c and 23d are arranged to be substantially parallelly opposed to each other. Further, the upper and lower inner side surfaces 23c and 23d are arranged inside the through-hole 23b at an interval H2 larger than the height H1. In other words, the light-emitting diodes 21 and the upper inner side surface 23c are separated from each other at a prescribed interval. Thus, the liquid crystal display 100 is so formed that the light-emitting diodes 21 do not come into contact with the upper inner side surface 23c of the through-hole 23b. The upper inner side surface 23c is an example of the "photoreceiving surface" or the "first inner side surface" in the present invention, and the lower inner side surface 23d is an example of the "mounting portion" or the "second inner side surface" in the present invention.

The light guide 23 is arranged to fit into the rear chassis 24 through the reflection sheet 25 (see Fig. 3) mounted on the surface of a bottom portion 24a, described later, of the rear chassis 24. The light guide body portion 23a and the upper inner side surface 23c are arranged above the light-emitting diodes 21 (along arrow Z2). Thus, the liquid crystal display 100 is so formed that the light emitted by the light-emitting diodes 21 is introduced into the upper inner side surface 23c of the light guide 23 from below (along arrow Z1), repeatedly multiple-reflected by the reflection sheet 25 and emitted toward the liquid crystal panel 13 from the front side (along arrow Y1) of the light guide body portion 23a.

The rear chassis 24 consists of a metal member, and has the bottom portion 24a and a wall portion 24b, as shown in Fig. 3. The bottom portion 24a is arranged on the rear side (along arrow Y2) of the light guide 23, and substantially rectangular in plan view. Further, the bottom portion 24a is formed to cover the rear sides (along arrow Y2) of the light guide 23 and the reflection sheet 25. The wall portion 24b is provided to protrude frontward (along arrow Y1) along an outer peripheral portion of the bottom portion 24a. The rear chassis 24 has a recessed substrate relief portion 241 in order not to come into contact with the substrate 22, as shown in Fig. 3.

The reflection sheet 25 is arranged between the light guide 23 and the bottom portion 24a of the rear chassis 24, and formed to reflect light received from the light guide 23 frontward (along arrow Y1). The diffusion sheet 26 is stacked on the front side (along arrow Y1) of the light guide 23. The plurality of lens sheets 27 are stacked on the front side (along arrow Y1) of the diffusion sheet 26. The light emitted from the light guide 23 is transmitted through the diffusion sheet 26 and the plurality of lens sheets 27, and thereafter reaches the rear side (along arrow Y2) of the liquid crystal panel 13. At this time, the light is adjusted to a state of backlight exhibiting no irregularity and having desired brightness.

According to the first embodiment, as hereinabove described, the substrate 22 having the mounting surface 22a mounted with the light-emitting diodes 21 is so mounted on the lower inner side surface 23d of the through-hole 23b provided in the light guide 23 that the substrate 22 mounted on the lower inner side surface 23d of the light guide 23 is deformed following deformation of the light guide 23 when the ambient temperature or humidity changes or stress is externally applied to the liquid crystal display 100 to deform the light guide 23, whereby the relative positions of the light-emitting diodes 21 mounted on the mounting surface 22a of the substrate 22 and the upper inner side surface 23c of the light guide 23 receiving the light can be inhibited from changing. Thus, the light emitted by the light-emitting diodes 21 can be inhibited from being improperly introduced into the upper inner side surface 23c of the light guide 23, whereby brightness of the light guided toward the liquid crystal panel 13 can be inhibited from reduction and irregularization. Further, the substrate 22 is so arranged that the mounting surface 22a thereof is opposed to the upper inner side surface 23c, whereby the light-emitting diodes 21 mounted on the mounting surface 22a and the upper inner side surface 23c of the light guide 23 receiving the light can be easily opposed to each other.

According to the first embodiment, the back surface 22b of the substrate 22 is so bonded to the lower inner side surface 23d that the mounting surface 22a is opposed to the upper inner side surface 23c, whereby the mounting surface 22a of the substrate 22 and the upper inner side surface 23c of the light guide 23 can be easily opposed to each other. Further, the back surface 22b of the substrate 22 is so bonded to the lower inner side surface 23d of the light guide 23 that the light guide 23 and the substrate 22 can be approximated to each other, whereby the quantity of relative displacement of the light guide 23 and the substrate 22 can be reduced. Thus, the relative positions of the light-emitting diodes 21 and the upper inner side surface 23c receiving the light can be more effectively inhibited from changing.

According to the first embodiment, the light-emitting diodes 21 are arranged to be surrounded by the light guide 23 so that the substrate 22 mounted with the light-emitting diodes 21 can be easily approximated to the light guide 23, whereby the relative positions of the light-emitting diodes 21 and the upper inner side surface 23c receiving the light can be easily inhibited from changing. Further, the light guide 23 surrounds the light-emitting diodes 21, whereby the light emitted by the light-emitting diodes 21 can be efficiently introduced into the light guide 23.

According to the first embodiment, the through-hole 23b extending in the direction along the end surface of the light guide 23 is provided in the vicinity of the end surface of the light guide 23 and the substrate 22 is bonded to the lower inner side surface 23d provided on the through-hole 23b so that the substrate 22 can be arranged inside the light guide 23, whereby the substrate 22 can more easily follow deformation of the light guide 23.

According to the first embodiment, the through-hole 23b of the light guide 23 is provided with the upper inner side surface 23c receiving the light and the lower inner side surface 23d arranged to be opposed to the upper inner side surface 23c and the substrate 22 is bonded to the lower inner side surface 23d provided on the through-hole 23b of the light guide 23, whereby the mounting surface 22a (light-emitting diodes 21) of the substrate 22 and the upper inner side surface 23c of the light guide 23 can be easily opposed to each other through the inner side surfaces 23c and 23d of the through-hole 23b provided in the light guide 23.

According to the first embodiment, the through-hole 23b is formed to pass through the light guide 23 in the thickness direction (direction Y) thereof so that the substrate 22 can be arranged inside the through-hole 23b of the light guide 23, whereby the substrate 22 can be easily arranged inside the light guide 23.

According to the first embodiment, the substrate 22 is so bonded to the lower inner side surface 23d that the light-emitting diodes 21 and the upper inner side surface 23c are separated from each other at the prescribed interval, whereby the light-emitting diodes 21 separated from the upper inner side surface 23 can be inhibited from coming into contact with the upper inner side surface 23c upon deformation of the light guide 23.

According to the first embodiment, the substrate 22 is formed to be deflectable following deformation of the light guide 23 so that the substrate 22 can be easily deflected to follow deformation of the light guide 23 upon the deformation of the light guide 23, whereby the relative positions of the light-emitting diodes 21 and the upper inner side surface 23c receiving the light can be more easily inhibited from changing.

According to the first embodiment, the substrate 22 is bonded to the lower inner side surface 23d through the heat radiation tape 22c having adhesiveness, whereby heat generated by the light-emitting diodes 21 can be radiated through the heat radiation tape 22c.

According to the first embodiment, the rear chassis 24 is formed not to come into contact with the substrate 22, whereby the relative positions of the light-emitting diodes 21 and the upper inner side surface 23c can be inhibited from changing due to contact between the rear chassis 24 and the substrate 22.

### (Second Embodiment)

The structure of a liquid crystal display 200 (see Fig. 1) according to a second embodiment of the present invention is now described with reference to Figs. 1, 2, 4, 6 and 7. In the liquid crystal display 200 according to the second embodiment, a substrate 22 is mounted on a plurality of protrusions 33b of a light guide 33, dissimilarly to the aforementioned first embodiment in which the substrate 22 is mounted in the through-hole 23b of the light guide 23.

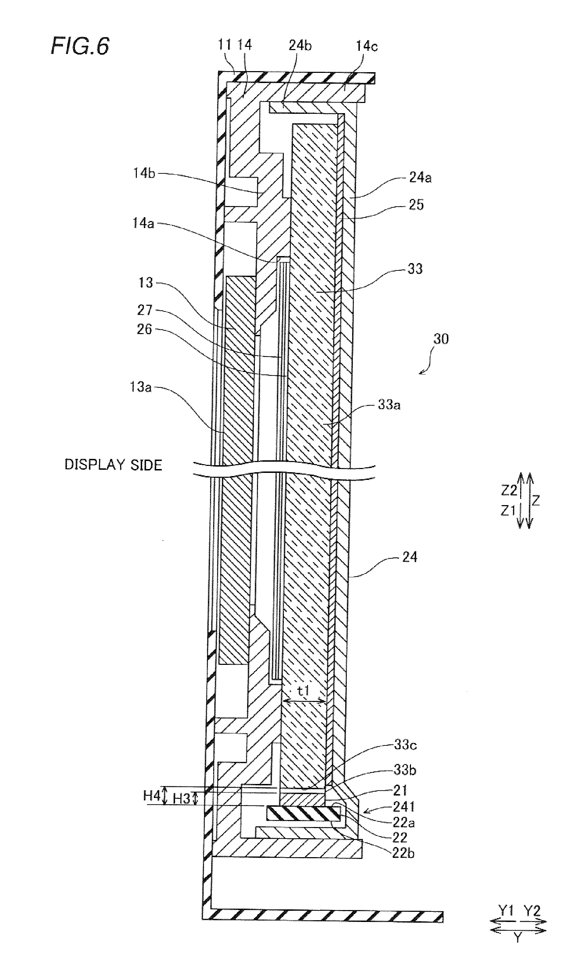

The liquid crystal display 200 according to the second embodiment of the present invention includes a display body 1 and a stand 2 supporting the display body 1 to be rotatable in the horizontal direction (direction X) and the anteroposterior direction (direction Y), as shown in Fig. 1. The display body 1 includes a front cabinet 11, a rear cabinet 12, a liquid crystal panel 13, a mold frame 14 and a backlight 30, as shown in Figs. 2 and 6.

The backlight 30 is formed to emit light toward the rear surface (along arrow Y2) of the liquid crystal panel 13. Thus, the liquid crystal panel 13 can display bright and clear images. The backlight 30 is an edge-lit type member receiving light from a light source from an edge of a light guide. The backlight 30 is combined with the liquid crystal panel 13, to constitute a liquid crystal module. The backlight 30 includes a plurality of light-emitting diodes 21, the substrate 22, the light guide 33, a rear chassis 24, a reflection sheet 25, a diffusion sheet 26 and a plurality of lens sheets 27, as shown in Fig. 6. The light-emitting diodes 21 are examples of the "light-emitting device" in the present invention.

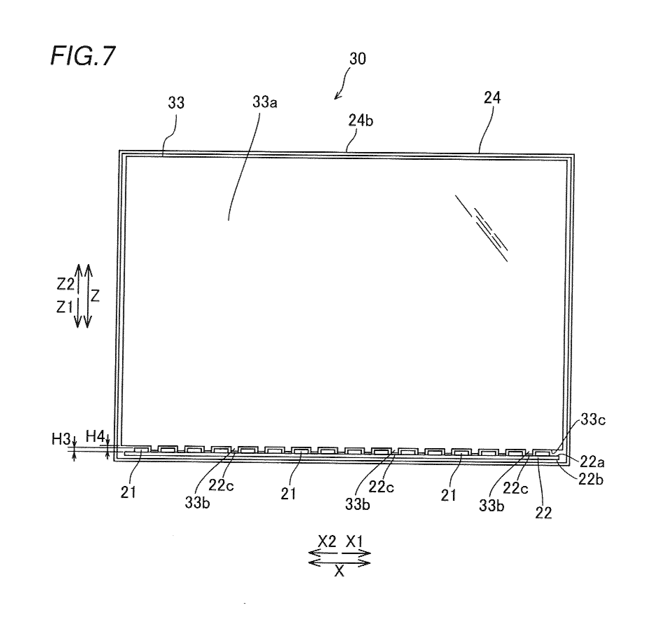

The plurality of light-emitting diodes 21 are mounted on a mounting surface 22a of the substrate 22 at a substantially regular interval D1 along the direction X, as shown in Fig. 4. The light-emitting diodes 21 are arranged under a photoreceiving surface 33c, described later, of the light guide 33 (along arrow Z1), as shown in Figs. 6 and 7. The light-emitting diodes 21 are formed to substantially perpendicularly emit light toward the mounting surface 22a of the substrate 22. In other words, the light-emitting diodes 21 are formed to emit light upward (along arrow Z2) to be directed to the photoreceiving surface 33c of the light guide 33. Further, the light-emitting diodes 21 have a height H3 (length in a direction Z). In addition, the light-emitting diodes 21 are arranged to be surrounded by the light guide 33 between the plurality of protrusions 33b, described later, of the light guide 33.

The substrate 22 has the mounting surface 22a mounted with the light-emitting diodes 21 thereon (along arrow Z2) and a back surface 22b arranged on the back side (along arrow Z1) of the mounting surface 22a, as shown in Figs. 4 and 6. The mounting surface 22a of the substrate 22 is bonded to the protrusions 33b of the light guide 33 through a heat radiation tape 22c, as shown in Figs. 4 and 6. The substrate 22 is bonded to the plurality of protrusions 33b on a plurality of positions between the plurality of light-emitting diodes 21 mounted thereon. The substrate 22 is made of glass epoxy resin, and formed to be deflectable in response to deformation of the light guide 33. The mounting surface 22a of the substrate 22 is arranged to be opposed to the photoreceiving surface 33c, described later, of the light guide 33. The substrate 22 has wires (not shown), and connects the plurality of light-emitting diodes 21 with a control board portion (not shown). The heat radiation tape 22c is made of an acrylic material, easily conducts heat, and has adhesiveness.

The light guide 33 is made of transparent acrylic resin having translucency, and provided in the form of a flat plate having a thickness t1 (in the direction Y), as shown in Fig. 6. The light guide 33 is substantially rectangular in plan view, as shown in Fig. 7. Further, the light guide 33 includes a light guide body portion 33a, the protrusions 33b and the photoreceiving surface 33c. The light guide body portion 33a is formed to guide light received from the light-emitting diodes 21 to the liquid crystal panel 13. The photoreceiving surface 33c is provided on the lower side (along arrow Z1) of the light guide body portion 33a. Further, the photoreceiving surface 33c is arranged to be opposed to the light-emitting diodes 21, and formed to receive the light emitted by the light-emitting diodes 21. The protrusions 33b are examples of the "mounting portion" in the present invention.

According to the second embodiment, the plurality of protrusions 33b are provided at a prescribed interval, to protrude downward (along arrow Z1) from the light guide body portion 33a. In other words, a portion of the light guide 33 opposed to the substrate 22 is integrally provided with projecting portions (protrusions 33b) mounted with the substrate 22 and recess portions serving as relief portions where the light-emitting diodes 21 are arranged. The substrate 22 is bonded to the lower sides (along arrow Z1) of the plurality of protrusions 33b through the heat radiation tape 22c. The protrusions 33b have a height H4 (length in the direction Z) larger than the height H3. Thus, the liquid crystal display 200 is so formed that the light-emitting diodes 21 do not come into contact with the photoreceiving surface 33c. The protrusions 33b are formed to have a width (length in the direction X) smaller than the interval D1 between adjacent light-emitting diodes 21. The light guide 33 is arranged to fit into the rear chassis 24 through the reflection sheet 25 (see Fig. 3) mounted on the surface of a bottom portion 24a of the rear chassis 24. The light guide body portion 33a and the photoreceiving surface 33c are arranged above the light-emitting diodes 21 (along arrow Z2). Thus, the liquid crystal display 200 is so formed that the light emitted by the light-emitting diodes 21 is introduced into the photoreceiving surface 33c from below (along arrow Z1), repeatedly multiple-reflected by the reflection sheet 25 and emitted toward the liquid crystal panel 13 from the front side (along arrow Y1) of the light guide body portion 33a.

The remaining structure of the second embodiment is similar to that of the aforementioned first embodiment.

Also in the structure according to the second embodiment, as hereinabove described, the substrate 22 having the mounting surface 22a mounted with the light-emitting diodes 21 is mounted on the protrusions 33b provided on the light guide 33 similarly to the aforementioned first embodiment, whereby brightness of the light guided toward the liquid crystal panel 13 can be inhibited from reduction and irregularization when the ambient temperature or humidity changes or stress is externally applied to the liquid crystal display 200 to deform the light guide 33.

According to the second embodiment, as hereinabove described, the protrusions 33b are provided to protrude from the light guide body portion 33a toward the substrate 22 (along arrow Z1) and the substrate 22 is bonded to the protrusions 33b protruding toward the substrate 22 (along arrow Z1), whereby the substrate 22 can be easily bonded to the light guide 33 through the protrusions 33b protruding toward the substrate 22 while avoiding the light-emitting diodes 21 mounted on the mounting surface 22a.

According to the second embodiment, the plurality of light-emitting diodes 21 are provided on the mounting surface 22a of the substrate 22 at the prescribed interval while the mounting surface 22a of the substrate 22 is bonded to the protrusions 33b on the plurality of positions between the light-emitting diodes 21 so that the substrate 22 can be bonded to the protrusions 33b on the plurality of positions of the mounting surface 22a, whereby the substrate 22 can be more firmly mounted on the light guide 33. Thus, the relative positions of the light-emitting diodes 21 and the photoreceiving surface 33c can be more reliably inhibited from changing.

According to the second embodiment, the portion of the light guide 33 opposed to the substrate 22 is integrally provided with the projecting portions (protrusions 33b) mounted with the substrate 22 and the recess portions serving as the relief portions where the light-emitting diodes 21 are arranged, whereby the protrusions 33b for the substrate 22 and the relief portions for the light-emitting diodes 21 can be easily formed.

According to the second embodiment, the protrusions 33b of the light guide 33 protruding toward the substrate 22 are formed to have the width (length in the direction X) smaller than the interval D1 between the adjacent light-emitting diodes 21, whereby the mounting surface 22a of the substrate 22 and the protrusions 33b can be easily bonded to each other between the light-emitting diodes 21.

The remaining effects of the second embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the liquid crystal display according to the present invention is applied to the liquid crystal television set having a TV tuner function or the liquid crystal monitor or the like connected to the PC or the like in each of the aforementioned first and second embodiments, the present invention is not restricted to this. The liquid crystal display according to the present invention may alternatively be applied to a liquid crystal monitor loaded on a car navigation system or an information display monitor (liquid crystal monitor) loaded in a train, a bus, a ship, an airplane or the like, for example.

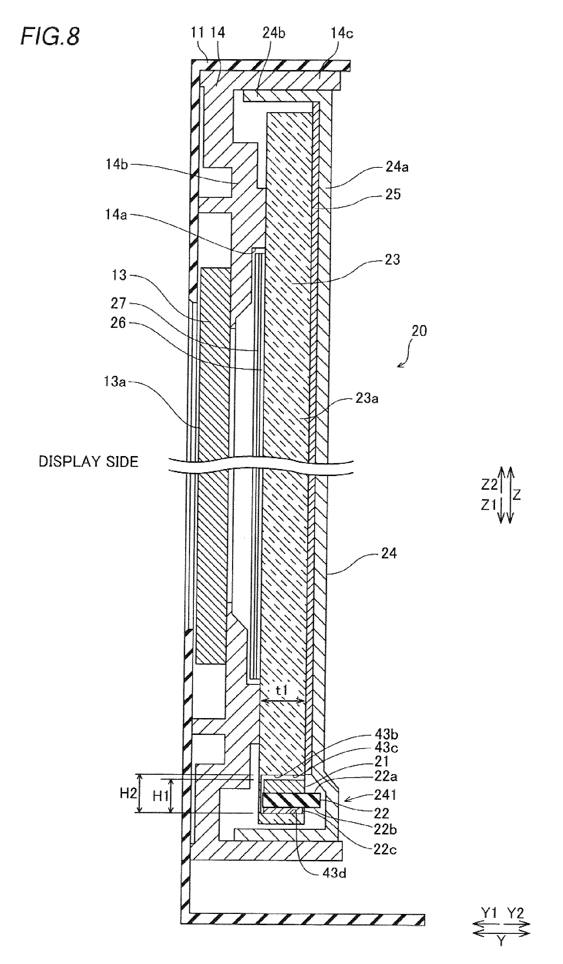

While the light guide is provided with the through-hole extending in the direction along the end surface of the light guide and the through-hole of the light guide is provided with the mounting portion to which the substrate is bonded and the photoreceiving surface receiving the light in the aforementioned first embodiment, the present invention is not restricted to this. Alternatively, a recess portion 43b may be provided on a light guide to be recessed in the thickness direction (direction Y) thereof, and a mounting portion 43b to which a substrate is bonded and a photoreceiving surface 43c receiving light may be provided on the recess portion 34b of the light guide, as in a modification of the first embodiment shown in Fig. 8.

While the substrate is bonded to the mounting portion on all positions of the mounting surface between the light-emitting devices in the aforementioned second embodiment, the present invention is not restricted to this. According to the present invention, the substrate may not be bonded to the mounting portion on all positions of the mounting surface between the light-emitting devices. For example, the substrate may be bonded to the mounting portion on random positions of the mounting surface between the light-emitting devices.

## Claims

1. A liquid crystal display (100, 200) comprising:
a liquid crystal panel (13);
a substrate (22) including a mounting surface (22a) mounted with a light-emitting device (21); and
a light guide (23, 33) including a photoreceiving surface (23c, 33c, 43c) arranged to be opposed to said mounting surface for receiving light emitted by said light-emitting device, a light guide body portion (23a, 33a) guiding said light received through said photoreceiving surface toward said liquid crystal panel and a mounting portion (23d, 33b, 43d) mounted with said substrate so that said mounting surface is opposed to said photoreceiving surface.

2. The liquid crystal display according to claim 1, wherein
said mounting surface of said substrate or a surface (22b) of said substrate on the back side of said mounting surface is bonded to said mounting portion so that said mounting surface is opposed to said photoreceiving surface.

3. The liquid crystal display according to claim 1, wherein
said light-emitting device is arranged to be surrounded by said light guide.

4. The liquid crystal display according to claim 1, wherein
said light guide further includes a through-hole (23b) or a recess portion (43b) provided in the vicinity of an end surface of said light guide to extend in a direction along said end surface of said light guide, and
said substrate is bonded to said mounting portion provided on said through-hole or said recess portion.

5. The liquid crystal display according to claim 4, wherein
said through-hole or said recess portion of said light guide is provided with a first inner side surface (23c, 43c) serving as said photoreceiving surface and a second inner side surface (23d, 43d) serving as said mounting portion arranged to be opposed to said first inner side surface, and
said substrate is bonded to said second inner side surface serving as said mounting portion provided on said through-hole or said recess portion of said light guide.

6. The liquid crystal display according to claim 4, wherein
said through-hole or said recess portion is formed to pass through said light guide or to be recessed in the thickness direction of said light guide.

7. The liquid crystal display according to claim 5, wherein
said substrate is bonded to said second inner side surface serving as said mounting portion so that said light-emitting device and said first inner side surface serving as said photoreceiving surface are arranged to be separated from each other at a prescribed interval.

8. The liquid crystal display according to claim 1, wherein
said mounting portion is provided to protrude from said light guide body portion toward said substrate, and
said substrate is bonded to said mounting portion protruding toward said substrate.

9. The liquid crystal display according to claim 8, wherein
a plurality of said light-emitting devices are provided on said mounting surface of said substrate at a prescribed interval, and
said mounting surface of said substrate is bonded to said mounting portion on a plurality of positions between said light-emitting devices.

10. The liquid crystal display according to claim 9, wherein
a projecting portion serving as said mounting portion and a recessed relief portion for receiving said light-emitting devices thereon are integrally formed on a portion of said light guide opposed to said substrate.

11. The liquid crystal display according to claim 9, wherein
said mounting portion of said light guide protruding toward said substrate is formed to have a width smaller than said prescribed interval between adjacent said light-emitting devices.

12. The liquid crystal display according to claim 1, wherein
said substrate is formed to be deflectable in response to deformation of said mounting portion of said light guide.

13. The liquid crystal display according to claim 1, wherein
said substrate is bonded to said mounting portion through a heat radiation tape (22c) having adhesiveness.

14. The liquid crystal display according to claim 1, further comprising a rear chassis (24) arranged to cover the back surface of said light guide, wherein
said rear chassis is formed not to be in contact with said substrate.

15. The liquid crystal display according to claim 1, wherein
said light-emitting device includes a light-emitting diode (21).
